# EUROPÄISCHE PATENTSCHRIFT

(11) **EP 1 561 435 B1**
(45) Veröffentlichungstag und Bekanntmachung des Hinweises auf die Patenterteilung: **29.08.2012**
(21) Anmeldenummer: 05007587.8
(22) Anmeldetag: 18.10.2000
(51) Int. Cl.: A61C 17/34, A61C 17/20

(54) **Zahnbürste mit mechanischer Vibrationsvorrichtung**
Toothbrush with mechanical vibrating device
Brosse à dents avec des moyens de vibrations mécaniques

(30) Priorität: 19.10.1999 DE 19950204; 03.11.1999 DE 29919053 U
(43) Veröffentlichungstag der Anmeldung: 10.08.2005
(62) Teilanmeldung aus: 00965717.2
(73) Patentinhaber: Trisa Holding AG, 6234 Triengen (CH)
(72) Erfinder: Häfliger, Peter, 6234 Triengen (CH); Fischer, Franz, 6234 Triengen (CH); Elster, Günther, 89312 Günzburg (DE)
(74) Vertreter: Schaad, Balass, Menzl & Partner AG

(56) Entgegenhaltungen:
- EP-A- 0 704 180
- EP-A- 0 850 602
- GB-A- 2 250 428
- US-A- 3 685 080
- US-A- 5 546 624

## Beschreibung

Die Erfindung betrifft eine Zahnbürste gemäss dem Oberbegriff des Anspruches 1.

Für die Zahnreinigung werden heutzutage entweder herkömmliche Handzahnbürsten oder Elektrozahnbürsten, bei denen ein beweglicher Bürstenkopf motorisch vom Handgriff her antreibbar ist, verwendet. Mit den letzteren wird in der Regel eine intensivere Reinigungswirkung erreicht als mit den Handzahnbürsten, sie weisen jedoch den Nachteil auf, dass sie relativ voluminös und teuer sind, das Zahnfleisch verletzen und eine starke Abrasion des Zahnschmelzes verursachen können.

Dokument GB-A-2 250 428 offenbart den nächstliegenden Stand der Technik.

Der vorliegenden Erfindung liegt die Aufgabe zugrunde, eine kostengünstige Zahnbürste zu schaffen, die in ihrer Grösse etwa den herkömmlichen Handzahnbürsten entspricht und dennoch eine diesen gegenüber verbesserte Reinigungswirkung ermöglicht.

Diese Aufgabe wird erfindungsgemäss durch eine Zahnbürste mit den Merkmalen des Anspruches 1 gelöst.

Bevorzugte Weiterausgestaltungen der erfindungsgemässen Zahnbürste bilden den Gegenstand der abhängigen Ansprüche.

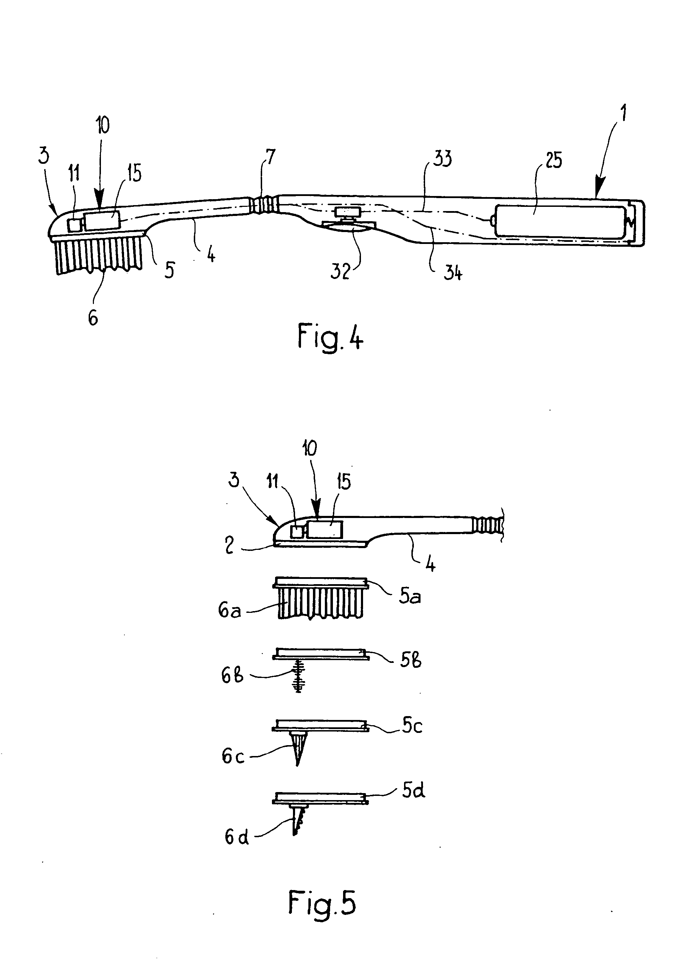

Die Erfindung wird nun anhand der Zeichnung näher erläutert. Die in den Figuren 4 und 5 gezeigten Ausführungsbeispiele sind Teil der Erfindung.

Es zeigen rein schematisch:
- Fig. 1: in Seitenansicht und teilweise im Schnitt ein erstes Ausführungsbeispiel einer erfindungsgemässen Zahnbürste und einen Handgriff-Verschlussteil voneinander getrennt (ohne Batterie);
- Fig. 2: in Unteransicht und teilweise im Schnitt ein zweites Ausführungsbeispiel einer erfindungsgemässen Zahnbürste im zusammengesetzten Zustand;
- Fig. 3: in Seitenansicht und teilweise im Schnitt die Zahnbürste nach Fig. 2 und den Verschlussteil voneinander getrennt (ohne Batterie);
- Fig. 4: in Seitenansicht ein drittes Ausführungsbeispiel einer erfindungsgemässen Zahnbürste im zusammengesetzten Zustand; und
- Fig. 5: einen vorderen Teil der Zahnbürste nach Fig. 4 mit verschiedenen Ausführungsformen auswechselbarer Behandlungsköpfe.

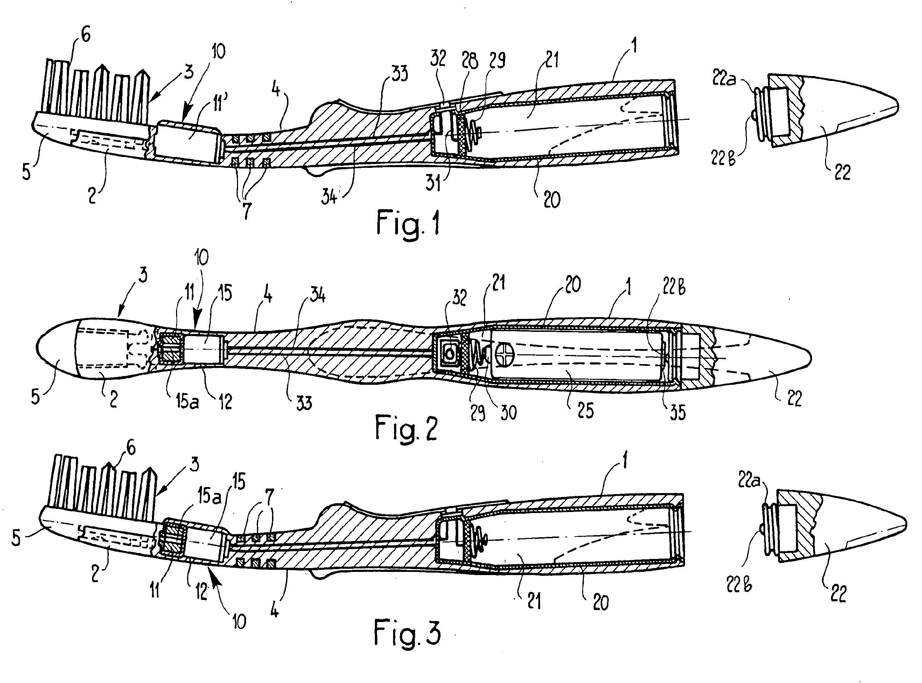

Sowohl die in Fig. 1 dargestellte Zahnbürste als auch diejenige nach Fig. 2 und 3 weist jeweils einen Handgriff 1, einen vorderen, borstentragenden Kopfteil 3 sowie einen den Kopfteil 3 mit dem Handgriff 1 verbindenden Halsteil 4 auf. Die zu Borstenbüscheln 6 zusammengefassten Borsten sind in einem Borstenträger 5 verankert und bilden mit ihren freistehenden Enden eine gegebenenfalls profilierte Bürstfläche. Bei der dargestellten Ausführungsform ist der Borstenträger 5 mit den Borstenbüscheln 6 in einer an sich bekannten und daher nicht näher beschriebenen Weise auswechselbar auf einen Halteteil 2 des Kopfteiles 3 aufgesetzt.

Der Halsteil 4 ist mit Halsteilzonen 7 aus einer elastisch nachgiebigeren Materialkomponente versehen, die die Elastizität des Halsteiles 4 bewirken oder zusätzlich steigern, so dass der borstentragende Kopfteil 3 beim Gebrauch der Zahnbürste bei einer Einwirkung von Kräften in Richtung gegen die Bürstfläche federelastisch zurückdrängbar ist. Gegebenenfalls sind die Halsteilzonen 7 als sich über einen Teil des Halsumfanges erstreckende, mit einem elastisch nachgiebigen Material (z.B. mit thermoplastischem Elastomer) gefüllte Einkerbungen ausgebildet. Eine andere Form und Anzahl von Halsteilzonen wäre selbstverständlich durchaus denkbar. Eine flexible Halszone ist auch ohne Verwendung von elastischen Materialkomponenten denkbar, z.B. durch Einschnürungen oder durch einen Balg.

Im vorderen Kopfteil 3 bzw. im an den Kopfteil 3 angrenzenden Bereich des Halsteiles 4 ist eine mechanische Vibrationsvorrichtung 10 integriert, mittels welcher dem borstentragenden Kopfteil 3 die Zahnreinigung bewirkende oder verstärkende Vibrationen erteilt werden können. Die Vibrationsvorrichtung 10 ist über im Halsteil 4 verlaufende elektrische Verbindungen an eine im Handgriff 1 untergebrachte elektrische Energiequelle anschliessbar, wie anschliessend beschrieben wird. Die bereits erwähnten Halsteilzonen 7 aus einem elastisch nachgiebigen Material wirken dabei als die Schwingung zwischen dem vibrierenden Kopfteil 3 und dem Handgriff 1 dämpfende Mittel, so dass sich die Vibrationswirkung vor allem im Kopfteil entfaltet und nur geringfügig auf den Handgriff 1 übertragen wird. Dies bedeutet, dass während des Zahnreinigungsvorganges nur geringfügige Schwingungen im Handgriff 1 zu verspüren sind, und dadurch die Handhabung der Zahnbürste angenehm ist. Aber auch umgekehrt ist es von Vorteil, dass die erzeugte Vibration durch den Handgriff 1 nicht gedämpft wird und sich im Kopfteil 3 voll auswirken kann. Anstelle der aus elastisch nachgiebigem Material bestehenden Halsteilzonen 7 wären allerdings auch andere schwingungsdämpfende Mittel denkbar; es muss nicht unbedingt ein elastisches Material eingesetzt werden. Die Dämpfung kann auch unter Verwendung eines Grundmaterials durch besondere Formgestaltung des Halsteiles erreicht werden, beispielsweise durch Vorhandensein eines Balg/Ziehharmonika - Teiles etc.

Im Handgriff 1 ist eine sich in seiner Längsrichtung erstreckende Kapsel bzw. Hülse 20 aus elektrisch leitendem Material untergebracht. Sowohl der Handgriff 1 als auch die Hülse 20 sind nach hinten offen, so dass ein durch einen Verschlussteil 22 von hinten verschliessbarer Hohlraum 21 gebildet ist, in den eine Batterie 25, beim dargestellten Ausführungsbeispiel eine handelsübliche, nicht wiederaufladbare Stiftbatterie mit einer definierten Leistung (z.B. 1,5 V) als Energiequelle für die Vibrationsvorrichtung 10 einsetzbar ist. Als Energiequelle könnte allerdings auch eine Knopfbatterie oder eine wiederaufladbare Akku-Zelle Verwendung finden.

In der Hülse 20 ist an einer Querwand 28 ein Federkontakt 29 für den Plus-Pol 30 der Batterie 25 (vgl. Fig. 2) angebracht, der über eine elektrische Leitung 31, einen in der Hülse 20 eingebauten und von der Aussenseite des Handgriffes 1 betätigbaren Schalter 32 und eine im Halsteil 4 verlaufende elektrische Leitung 33 an die Vibrationsvorrichtung 10 angeschlossen ist. Mittels des Schalters 32 kann die elektrische Verbindung unterbrochen werden.

Der Verschlussteil 22 ist mit einem Gewindezapfen 22a aus einem elektrisch leitenden Material ausgestattet und mit diesem in den Handgriff 1 bzw. in die Hülse 20 einschraubbar. Der Gewindezapfen 22a ist mit einer Kontaktfläche 22b versehen, die beim eingeschraubten Verschlussteil 22 am Minus-Pol 35 der in die Hülse 20 eingesetzten Batterie 25 zur Anlage kommt. Die elektrische Verbindung des Minus-Pols 35 mit der Vibrationsvorrichtung 10 erfolgt über den Gewindezapfen 22a, die Hülse 20 selber und eine die Hülse 20 an die Vibrationsvorrichtung 10 anschliessende, im Halsteil 4 verlaufende Leitung 34.

Anstatt über die elektrisch leitende Hülse 20 könnte die Stromübertragung auch anders erfolgen, beispielsweise unter Verwendung von Drähten oder eines elektrisch leitenden Kunststoffes.

Bei dem in Fig. 1 dargestellten Ausführungsbeispiel umfasst die Vibrationsvorrichtung 10 ein vorzugsweise in der Art eines Schwingungsankers funktionierendes Vibrationselement 11', das über die Leitungen 33, 34 direkt mit der Energiequelle elektrisch verbindbar ist und bei angeschlossener Energiequelle in Vibrationen versetzt wird.

Bei der in Fig. 2 und 3 dargestellten Zahnbürsten-Variante besteht die Vibrationsvorrichtung 10 aus einem Vibrationselement 11 in Form eines mechanische Vibrationen erzeugenden, um eine in Längsrichtung der Zahnbürste liegende Achse drehbaren Exzenters und aus einem unmittelbar angrenzend angeordneten, als Mikromotor 15 ausgebildeten Antrieb. Das Vibrationselement 11 ist mit der Welle 15a des über die Leitungen 33, 34 mit der Energiequelle elektrisch verbindbaren Mikromotors 15 verbunden. Der Mikromotor 15 und der Exzenter können als eine Baueinheit in einem Gehäuse 12 untergebracht werden.

Statt eines drehbeweglich antreibbaren Exzenters könnte auch ein translatorisch antreibbares Vibrationselement 11 in Frage kommen .

Es wäre möglich, bei der erfindungsgemässen Zahnbürste den borstentragenden Kopfteil 3 beweglich gegenüber dem Halsteil 4 anzuordnen, um diesen bei mittels der Vibrationsvorrichtung 10 erzeugten Vibrationen in eine Bewegung gegenüber dem restlichen Teil der Zahnbürste zu versetzen.

Die elektrischen Leitungen 31, 33, 34 könnten auch mit Elektrizität leitenden Kunststoffbahnen realisiert werden.

Beim die Leitungen 31, 33 verbindenden oder unterbrechenden Schalter 32 kann es sich beispielsweise auch um einen Magnetschalter handeln.

Die bevorzugte Ausgestaltung des Schalters 32 beinhaltet jedoch einen auf einem Print angeordneten Impulsschalter und weitere elektronische Komponenten, welche den Schaltzustand speichern.

Die elektrische Verbindung zwischen der Batterie 25 und dem Vibrationselement 11' (Fig. 1) oder dem Antrieb 15 (Fig. 2 und 3) kann aber auch statt durch den Schalter 32 durch Drehen des in den Handgriff 1 bzw. in die Hülse 20 einschraubbaren oder mit diesen bajonettartig verbindbaren Verschlussteiles 22 bewerkstelligt oder unterbrochen werden (d.h. bei einer solchen Ausführung entfällt der Schalter 32).

Statt der Schraubverbindung des hinteren Verschlussteils 22 mit dem Handgriff 1 wäre selbstverständlich auch eine andere lösbare Verbindung (z.B. Steckverbindung, Bajonettverbindung etc.) und eine entsprechende Ausgestaltung des mit dem Minus-Pol 35 zusammenwirkenden Kontaktteils möglich.

Der Verschlussteil 22 könnte auch eine durchaus andere Form aufweisen, als in der Zeichnung dargestellt.

Beispielsweise könnte der Verschlussteil mit einer Abstellfläche bzw. einem Fussteil ausgestattet sein und somit als ein Element zum Aufstellen der Zahnbürste dienen.

Die in Fig. 4 dargestellte Zahnbürste entspricht im wesentlichen derjenigen nach Fig. 2 und 3; die gleichen Teile sind wiederum mit den gleichen Bezugsziffern bezeichnet. Gemäss Fig. 4 ist die Vibrationsvorrichtung 10 direkt im vorderen Kopfteil 3 angeordnet. Bei diesem Ausführungsbeispiel entfällt die Hülse 20; die Batterie 25 ist direkt über die Leitungen 33, 34 mit der Vibrationsvorrichtung 10 verbunden. Auch bei dieser Zahnbürste wird vorzugsweise ein auf einen Halteteil 2 des Kopfteiles 3 z.B. in der Art einer Schnappverbindung aufsetzbarer, auswechselbarer Borstenträger 5 verwendet. Die Auswechselbarkeit des mit den Borstenbüscheln 6 versehenen Borstenträgers 5 ist von besonderem Vorteil, da die mit der Vibrationsvorrichtung 10 ausgestattete Zahnbürste unabhängig von der Lebensdauer der Borsten, die in der Regel sogar kleiner ist als die Lebensdauer der Batterie 25, verwendet werden kann.

Wie aus Fig. 5 ersichtlich können dabei statt des Borstenträgers 5 bzw. 5a, der einen Teil eines konventionellen Bürstenkopfes bildet und mit Borstenbüscheln 6 bzw. 6a versehen ist, wahlweise verschiedene andere Borstenträger bzw. Adapter 5b bis 5d auf den Halteteil 2 aufgesetzt werden, die mit verschiedenen Interdentalbürsten 6b, 6c bzw. Interdental-Behandlungsteilen 6d zur wirksamen Reinigung der Zahnzwischenräume versehen sind. Die Interdentalbürste 6b kann beispielsweise als eine Spiralbürste aus beschichtetem Draht mit eingedrehten Kunststofffilamenten ausgebildet sein. Die Interdentalbürste 6c besteht aus Borsten, die zusammen eine Bündelspitze bilden. Der Behandlungsteil 6d kann z.B. als ein eine Spitze aufweisendes Kunststoffelement ausgebildet sein, der vorzugsweise mit einer abrasiven Beschichtung zur Entfernung von Plaque und Zahnstein in den Zahnzwischenräumen versehen sein kann. Selbstverständlich könnten auch andere beliebige Behandlungsköpfe verwendet werden.

Auch bei der Variante nach Fig. 4 und 5 könnte der Borstenträger 5 derart ausgestaltet werden, dass eine vibrationsbedingte Bewegung gegenüber dem Halteteil 2 möglich wäre.

Zur Einbringung der Vibrationsvorrichtung 10, der Verbindungsleitungen 33, 34 und weiterer elektronischen Komponenten kann die erfindungsgemässe Zahnbürste bzw. ihr Gehäuse zweiteilig hergestellt und die beiden Teile nach dem Hineinlegen der vorstehend erwähnten Teile wasserdicht verschweisst werden.

Die erfindungsgemässe Zahnbürste kann aber auch vorzugsweise in einem Zwei- oder Mehrkomponenten-Spritzgiessverfahren hergestellt werden. Mit Vorteil werden dabei die vorstehend erwähnten Teile als eine Einheit in einen aus einer ersten Materialkomponente gespritzten Formteil eingelegt und danach mit der zweiten Materialkomponente (oder mit den weiteren Materialkomponenten) umspritzt. Es muss sich dabei nicht um vollständiges Umspritzen handeln. Gewisse Teile können frei liegen, wodurch eine ästhetische Wirkung erzielt werden kann.

Allerdings könnten die oben erwähnten elektronischen Komponenten auch in einen fertig gespritzten Handgriff 1 eingesetzt werden.

Dadurch, dass nicht nur das Vibrationselement 11, 11' selber sondern auch der Antrieb, d.h. der Mikromotor 15, im vorderen Kopfteil 3 oder im unmittelbar angrenzenden vorderen Bereich des Halsteiles 4 angeordnet sind, müssen keine mechanische Antriebsmittel zur Verbindung des Mikromotors mit dem Vibrationselement 11 durch den flexiblen Halsteil 4 geführt werden. Durch den Halsteil 4 verlaufen lediglich die elektrischen Leitungen 33, 34 (Drähte, Kabel oder elektrisch leitende Kunststoffbahnen).

Erfindungsgemäss wird eine mechanische Vibrationsvorrichtung 10 verwendet, die einen Durchmesser von weniger als 15 mm, vorzugsweise weniger als 6 mm aufweist, und weniger als 35 mm, vorzugsweise weniger als 20 mm lang ist. Dadurch wird gewährleistet, dass die Zahnbürste ergonomisch ausgestaltet werden kann und gut handhabbar ist. Die erfindungsgemässe Zahnbürste entspricht in ihrer Grösse ungefähr den herkömmlichen Handzahnbürsten, was eine einfachere Handhabung im Vergleich zu den auf dem Markt erhältlichen, wesentlich grösseren Elektrozahnbürsten bedeutet, und dennoch wird mit dieser Zahnbürste eine mit den bekannten Elektrozahnbürsten vergleichbare, diesen gegenüber jedoch schonendere Reinigungswirkung erreicht. Ausserdem ist die erfindungsgemässe Zahnbürste in der Herstellung einfach und kostengünstig.

## Patentansprüche

1. Zahnbürste mit einem Handgriff (1), einem Borsten tragenden Kopfteil (3), einem den Kopfteil (3) mit dem Handgriff (1) verbindenden Halsteil (4) und einer den Kopfteil (3) in Schwingung versetzenden mechanischen Vibrationsvorrichtung (10), die einen Mikro-Antriebsmotor (15) und ein durch den Mikro-Antriebsmotor (15) antreibbares Vibrationselement (11), das entweder als translatorisch antreibbares vibrationselement oder als drehbeweglich antreibbarer Exzenter ausgebildet ist,
aufweist, wobei der Mikro-Antriebsmotor (15) über im Halsteil (4) verlaufende elektrische verbindungen (33, 34) mit einer im Handgriff (1) untergebrachten elektrischen Energiequelle (25) wirkverbunden ist, und wobei das vibrationselement (11) bei an den Mikro-Antriebsmotor (15) angeschlossener Energiequelle (25) in Vibrationen versetzt wird, **dadurch gekennzeichnet, dass** die mechanische Vibrationsvorrichtung (10) einschliesslich des Mikro-Antriebsmotors (15) und des Vibrationselements (11) im an den Kopfteil (3) angrenzenden Bereich des Halsteils (4) angeordnet ist.

2. Zahnbürste nach Anspruch 1, **dadurch gekennzeichnet, dass** zur Verhinderung einer Vibrationsübertragung auf den Handgriff (1) schwingungsdämpfende Mittel (7) vorgesehen sind.

3. Zahnbürste nach Anspruch 2, **dadurch gekennzeichnet, dass** der Halsteil (4) im zwischen der Vibrationsvorrichtung (10) und dem Handgriff (1) liegenden Bereich schwingungsdämpfende Halsteilzonen (7) aus einem elastisch nachgiebigen Material aufweist.

4. Zahnbürste nach einem der Ansprüche 1 bis 3, **dadurch gekennzeichnet, dass** der Kopfteil (3) einen Halteteil (2) aufweist, auf welchen ein mit Borsten versehener Borstenträger (5) auswechselbar aufgesetzt ist.

5. Zahnbürste nach einem der Ansprüche 1 bis 4, **dadurch gekennzeichnet, dass** der Kopfteil (3) gegenüber dem Halsteil (4) beweglich angeordnet und durch die mittels der Vibrationsvorrichtung (10) erzeugten Vibrationen in eine Relativbewegung gegenüber dem Halsteil (4) versetzbar ist.

6. Zahnbürste nach einem der Ansprüche 1 bis 5, **dadurch gekennzeichnet, dass** die vibrationsvorrichtung (10) und die elektronischen Komponenten eine Einheit bilden, die dazu bestimmt ist, in einen aus einer ersten Materialkomponente im Spritzgiessverfahren hergestellten Formteil eingelegt und mit mindestens einer weiteren Materialkomponente wenigstens teilweise umspritzt zu werden.

7. Zahnbürste nach einem der Ansprüche 1 bis 5 **dadurch gekennzeichnet, dass** die Vibrationsvorrichtung (10) und die elektronischen Komponenten eine Einheit bilden, die dazu bestimmt ist, zwischen zwei separat hergestellten Zahnbürstenteilen untergebracht zu werden, die
miteinander wasserdicht verbunden, vorzugsweise verschweisst werden.

8. Zahnbürste nach einem der Ansprüche 1 bis 7, **dadurch gekennzeichnet, dass** die Vibrationsvorrichtung (10) einen Durchmesser von weniger als 15 mm, vorzugsweise weniger als 6 mm, und eine Länge von weniger als 35 mm, vorzugsweise weniger als 20 mm, aufweist.

## Claims

1. Toothbrush having a handle (1), having a bristlecarrying head part (3), having a neck part (4), which connects the head part (3) to the handle (1) and having a mechanical vibratory device (10) which causes the head part (3) to vibrate and which comprises a micromotor (15) and a vibration element (11) which is drivable by the micromotor (15), the vibration element (11) being either designed as translatorically drivable vibration element or as rotationally drivable eccentric, wherein the micromotor (15) is operatively connected to an electric energy source (25), being accommodated in the handle (1), via electric lines (33, 34) running in the neck part (4) and wherein the vibration element (11) is caused to vibrate when the energy source is connected to the micromotor (15), **characterized in that** the mechanical vibratory device (10) inclusive the micromotor (15) and the vibration element (11) is arranged in the section of the neck part (4) adjacent the head part (3).

2. Toothbrush according to claim 1, **characterized in that** in order to avoid vibration transmission to the handle (1), vibration damping means (7) are provided.

3. Toothbrush according to claim 2, **characterized in that** the neck part (4) comprises, in the section which lies between the vibratory device (10) and the handle (1), neck-part zones (7) made of an elastically resilient material.

4. Toothbrush according to one of claims 1 to 3, **characterized in that** the head part (3) comprises a retaining part (2) on which a bristle carrier (5) provided with bristles is positioned in an exchangeable manner.

5. Toothbrush according to one of claims 1 to 4, **characterized in that** the head part (3) is arranged such that it can be moved in relation to the neck part (4) and it can be caused to move relative to the neck part (4) by the vibrations produced by means of the vibratory device (10).

6. Toothbrush according to one of claims 1 to 5, **characterized in that** the vibratory device (10) and the electronic components form a unit which is provided for being inserted into a moulded part being made of a first material component by injection moulding and for being overmoulded at least partially with a further material component.

7. Toothbrush according to one of claims 1 to 5, **characterized in that** the vibratory device (10) and the electronic components form a unit which is provided for being arranged between two separately produced toothbrush parts which are connected, preferably welded, to one another in a water tight manner.

8. Toothbrush according to one of claims 1 to 7, **characterized in that** the vibratory device (10) has a diameter of less than 15 mm, preferably less than 6 mm, and a length of less than 35 mm, preferably less than 20 mm.

## Revendications

1. Brosse à dents comprenant un manche (1), une partie de tête (3) portant des poils, une partie de col (4) reliant la partie de tête (3) au manche (1) et un dispositif mécanique vibrant (10) faisant vibrer la partie de tête (3), qui présente un micromoteur d'entraînement (15) et un élément vibrant (11) pouvant être entraîné par le micromoteur d'entraînement (15), lequel élément vibrant est réalisé soit sous forme d'élément vibrant pouvant être entraîné en translation, soit sous forme d'excentrique pouvant être entraîné avec un mouvement de rotation, le micromoteur d'entraînement (15) étant en liaison fonctionnelle par le biais de connexions électriques (33, 34) s'étendant dans la partie de col (4) avec une source d'énergie électrique (25) montée dans le manche (1), l'élément vibrant (11), lorsque la source d'énergie (25) est raccordée au micromoteur d'entraînement (15), se mettant à vibrer, **caractérisée en ce que** le dispositif mécanique vibrant (10) y compris le micromoteur d'entraînement (15) et l'élément vibrant (11) est disposé dans la région de la partie de col (4) adjacente à la partie de tête (3).

2. Brosse à dents selon la revendication 1, **caractérisée en ce que** des moyens amortissant les vibrations (7) sont prévus pour empêcher un transfert de vibrations au manche (1).

3. Brosse à dents selon la revendication 2, **caractérisée en ce que** la partie de col (4) présente, dans la région située entre le dispositif vibrant (10) et le manche (1) des zones de partie de col (7) amortissant les vibrations, constituées d'un matériau élastiquement flexible.

4. Brosse à dents selon l'une quelconque des revendications 1 à 3, **caractérisée en ce que** la partie de tête (3) présente une partie de retenue (2) sur laquelle est posé, de manière remplaçable, un support de poils (5) pourvu de poils.

5. Brosse à dents selon l'une quelconque des revendications 1 à 4, **caractérisée en ce que** la partie de tête (3) est disposée mobile par rapport à la partie de col (4) et peut être mise en mouvement relatif par rapport à la partie de col (4) par les vibrations produites au moyen du dispositif vibrant (10).

6. Brosse à dents selon l'une quelconque des revendications 1 à 5, **caractérisée en ce que** le dispositif vibrant (10) et les composants électroniques forment une unité, qui est prévue pour être introduite dans une pièce moulée fabriquée à partir d'un premier composant de matériau dans un procédé de moulage par injection, et pour être au moins en partie surmoulée avec au moins un autre composant de matériau.

7. Brosse à dents selon l'une quelconque des revendications 1 à 5, **caractérisée en ce que** le dispositif vibrant (10) et les composants électroniques forment une unité, qui est prévue pour être montée entre deux parties de brosse à dents fabriquées séparément, qui sont connectées de manière étanche à l'eau l'une à l'autre, de préférence par soudage.

8. Brosse à dents selon l'une quelconque des revendications 1 à 7, **caractérisée en ce que** le dispositif vibrant (10) présente un diamètre inférieur à 15 mm, de préférence inférieur à 6 mm, et une longueur inférieure à 35 mm, de préférence inférieure à 20 mm.
